# EUROPÄISCHE PATENTANMELDUNG

(11) **EP 2 940 069 A1**
(43) Veröffentlichungstag der Anmeldung: **04.11.2015**
(21) Anmeldenummer: 15162332.9
(22) Anmeldetag: 02.04.2015
(51) Int. Cl.: C08J 5/24

(54) **VERFAHREN ZUR HERSTELLUNG VON LAGERSTABILEN EPOXY-PREPREGS UND DARAUS HERGESTELLTE COMPOSITES AUF BASIS VON RADIKALISCH POLYMERISIERBAREN SÄUREN UND EPOXIDEN**

(30) Priorität: 25.04.2014 DE 102014207785
(71) Anmelder: Evonik Degussa GmbH, 45128 Essen (DE)
(72) Erfinder: Spyrou, Emmanouil, 46514 Schermbeck (DE); Loesch, Holger, 44627 Herne (DE); Kreischer, Susanne, 45701 Herten (DE); Thesing, Andrea, 48683 Ahaus (DE)

(57) **Zusammenfassung**

Die Erfindung betrifft ein Verfahren zur Herstellung von lagerstabilen Epoxy-Prepregs und daraus hergestellte Composite-Bauteile (Formkörper).

## Beschreibung

Die Erfindung betrifft ein Verfahren zur Herstellung von lagerstabilen Epoxy-Prepregs und daraus hergestellte Composite-Bauteile (Formkörper). Zur Herstellung der Prepregs bzw. Bauteile mischt man Säuren und Epoxiden, wobei mindestens eine der beiden Komponenten radikalisch polymerisierbare Gruppen enthält. Optional können noch weitere nicht radikalisch polymerisierbare Säuren und/oder Epoxide sowie Radikalstarter, z. B. Photoinitiatoren hinzugegeben werden. Diese Mischung oder Lösung wird nach bekannten Verfahren auf Fasermaterial, wie z. B. Carbonfasern, Glasfasern oder Polymerfasern aufgebracht und mit Hilfe von Strahlen oder Plasmaanwendungen polymerisiert.

Nach der Polymerisation, z. B. bei Raumtemperatur oder bei bis zu 80 °C, entstehen Thermoplaste bzw. thermoplastische Prepregs, die nachträglich noch verformt werden können. Die säurefunktionalisierten Bestandteile können anschließend mit den bereits im System vorhandenen Epoxiden durch erhöhte Temperatur vernetzt werden. Auf diese Weise können formstabile Duroplaste bzw. vernetzte Composite-Bauteile erzeugt werden.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-layup Technologie eingesetzt.

Industrielle Anwender solcher Systeme verlangen neben schnelleren Zykluszeiten und höheren Lagerstabilitäten - auch bei Raumtemperatur -zusätzlich eine Möglichkeit, die Prepregs zuzuschneiden, ohne dass bei automatisiertem Zuschnitt und Lay-up der einzelnen Prepreg-Lagen, die Schneidwerkzeuge mit der häufig klebrigen Matrixmaterial verunreinigt werden. Verschiedene Formgebungsprozesse, wie z. B. das Reaction-Transfer- Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Formgeometrien angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

### Stand der Technik

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über 25 Pultrusionsverfahren eingesetzt werden. Als Nachteil wird häufig die Toxizität der verwendeten Isocyanate genannt.

Prepregs und daraus hergestellte Composites auf der Basis von Epoxy-Systemen werden zum Beispiel beschrieben in WO 98/50211, EP 309 221, EP 297 674, WO 89/04335 und US 4,377,657. In WO 2006/043019 wird ein Verfahren zur Herstellung von Prepregs auf der Basis von Epoxidharz- Polyurethanpulvern beschrieben. Des Weiteren sind Prepregs auf der Basis von pulverförmigen Thermoplasten als Matrix bekannt. In WO 99/64216 werden Prepregs und Composite sowie eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 590 702 werden Pulverimprägnierungen zur Herstellung von Prepregs beschrieben, bei denen das Pulver aus einem Gemisch aus einem Thermoplasten und einem reaktiven Monomer bzw. Prepolymeren besteht. Die WO 2005/091715 beschreibt ebenfalls die Verwendung von Thermoplasten zur Herstellung von Prepregs.

Prepregs mit einer Matrix auf der Basis von 2-Komponenten-Polyurethanen (2-K-PUR) sind gleichfalls bekannt. Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat, wie z.B. polymere Methylendiphenyldiisocyanate (MDI) ist, sind dies bei der zweiten Komponente Polyole bzw. bei neueren Entwicklungen auch Amino oder Amin-Polyol-Gemische. Beide Teile werden erst kurz vor der Verarbeitung miteinander vermischt. Danach erfolgt die chemische Aushärtung durch Polyaddition unter Bildung eines Netzwerkes aus Polyurethan bzw. Polyharnstoff. 2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalyse, Konzentration, Löslichkeit, Feuchtegehalt, NCO/OH-Verhältnis und Umgebungstemperatur sind die wichtigsten [siehe dazu: Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil. Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.

In DE 102009001793 und DE 102009001806 wird ein Verfahren zur Herstellung von lagerstabilen Prepregs, im Wesentlichen aufgebaut aus A) mindestens einem Faser förmigen Träger und B) mindestens einer reaktiven pulverförmigen Polyurethanzusammensetzung als Matrixmaterial beschrieben. Die Systeme können dabei auch Poly(meth)acrylate als Cobindemittel oder Polyolkomponente aufweisen. In DE 102010029355 werden solche Zusammensetzungen durch ein Direktschmelzeimprägnierverfahren in das Fasermaterial verbracht. In DE 102010030234 durch eine Vorbehandlung mit Lösungsmitteln. Nachteil dieser Systeme ist die hohe Schmelzviskosität bzw. die Verwendung von Lösungsmitteln, die zwischenzeitlich entfernt werden müssen, bzw. auch in toxikologischer Hinsicht Nachteile mit sich bringen können.

Die Aufgabe der vorliegenden Erfindung vor dem Hintergrund des Standes der Technik war es, eine neue Prepreg-Technologie zur Verfügung zu stellen, die ein einfacheres Verfahren zur Herstellung von problemlos zu handhabenden Prepreg-Systemen ermöglicht.

Insbesondere war es Aufgabe der vorliegenden Erfindung, ein beschleunigtes Verfahren zur Herstellung von Prepregs zur Verfügung zu stellen, welches eine gegenüber dem Stand der Technik deutlich verlängerte Lagerstabilität und/oder Verarbeitungszeit wie Standzeit, und Potlife ermöglicht.

Gelöst werden die Aufgaben mittels eines neuartigen Verfahrens zur Herstellung von Composite-Halbzeugen und deren Weiterverarbeitung zu Formteilen.

Gegenstand der Erfindung ist ein Verfahren zur Herstellung von Composites durch die Verfahrensschritte:
I. Herstellung einer reaktiven Zusammensetzung enthaltend
   A) mindestens eine reaktive Harzkomponente, die mindestens eine Säuregruppe aufweist, und
   B) mindestens eine reaktive Harzkomponente auf Epoxybasis,
   wobei mindestens eine oder beide der Komponenten A) und B) eine durch radikalische Polymerisation reaktionsfähige Gruppe aufweist,
II. Direkte Imprägnierung eines faserförmigen Trägers mit der Zusammensetzung aus I.,
III. Polymerisation der radikalisch polymerisierbaren Harzkomponenten in der Zusammensetzung mittels thermisch oder mit elektromagnetischer Strahlung aktivierbarer Radikalstarter, elektromagnetischer Strahlung, Elektronenstrahlung oder einem Plasma, wobei ein Prepreg erhalten wird,
   danach
IV. Formgebung zum Formteil
   und
V. Aushärten der Epoxykomponente in der Zusammensetzung.

Die reaktive Zusammensetzung kann weiter noch mindestens eine der folgenden Komponenten enthalten:
C) optional mindestens ein Initiator ausgewählt aus mindestens einem thermischen Radikalstarter und/oder einem Photoinitiator,
D) optional weitere Säuren oder Epoxide ohne radikalisch polymerisierbare Gruppen,
E) optional weitere radikalisch polymerisierbare Komponenten ohne Säure- oder Epoxygruppen,
F) optional weitere Hilfs- und Zuschlagstoffe.

Bevorzugt beträgt dabei das Mengenverhältnis der Säurekomponente A) zur Epoxykomponente B) zwischen 90 zu 10 und 10 zu 90.

Ganz besonders bevorzugt liegen die Säurekomponente und die Epoxykomponente in einem solchen Verhältnis zueinander vor, dass auf jede Säuregruppe 0,3 bis 3,0, bevorzugt 0,5 bis 2,0 besonders bevorzugt 0,8 bis 1,2 Epoxygruppen entfallen.

Der Vorteil dieses erfindungsgemäßen Systems liegt in der Herstellung eines verformbaren thermoplastischen Halbzeugs im Rahmen der Erfindung als Prepregs bezeichnet, das bei der Herstellung der Composite-Bauteile in einem weiteren Schritt duroplastisch vernetzt wird. Die Ausgangsformulierung ist flüssig und damit ohne Zugabe von Lösungsmitteln für die Imprägnierung von Fasermaterial geeignet. Die Halbzeuge sind lagerstabil bei Raumtemperatur. Im Vergleich zu gängigen Epoxysystemen zeichnen sie sich durch eine höhere Flexibilität aus. Zudem können derartige Matrices lichtstabil ausgelegt werden und damit für die Herstellung von Sichtcarbonteilen ohne weitere Lackierung verwendet werden.

Überraschend wurde gefunden, dass ausreichend imprägnierte, reaktive und lagerstabile Composite-Halbzeuge hergestellt werden können, indem man diese mit der oben genannten Kombination herstellt.

Man erhält so Composite-Halbzeuge mit gegenüber dem Stand der Technik zumindest gleichen aber auch verbesserten Verarbeitungseigenschaften, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß verwendbaren reaktiven Zusammensetzungen sind umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Der Begriff Composite-Halbzeuge wird im Rahmen dieser Erfindung synonym zu den Begriffen Prepreg und Organoblech verwendet. Bei einem Prepreg handelt es sich in der Regel um eine Vorstufe für duroplastische Composite-Bauteile. Bei einem Organoblech handelt es sich normalerweise um eine entsprechende Vorstufe für thermoplastische Composite-Bauteile.

### Träger

Das bevorzugt im erfindungsgemäßen Verfahren verwendete Trägermaterial in dem Composite-Halbzeug ist dadurch gekennzeichnet, dass die faserförmigen Träger größtenteils aus Glas, Kohlenstoff, Kunststoffen wie Polyamid (Aramid) oder Polyester, Naturfasern, oder mineralischen Fasermaterialien wie Basaltfasern oder keramische Fasern bestehen, einzeln oder aus Mischungen, oder aus mehreren Lagen verschiedener Fasertypen.

Die faserförmigen Träger liegen als textile Flächengebilde aus Vlies, Maschenware, Gewirke oder Gestricke, nicht maschige Gebinde wie Gewebe, Gelege oder Geflechte, als Langfaser- oder Kurzfasermaterialien vor, einzeln oder aus mehreren Lagen verschiedener Typen.

Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff und Glasfasern, können verwendet werden. Ebenso sind Hybrid-Composite-Bauteile mit Prepregs aus unterschiedlichen faserförmigen Trägern geeignet.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern).

Kohlenstofffasern kommen im Allgemeinen in Hochleistungsverbundstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser- Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

Erfindungsgemäß enthält die reaktive Zusammensetzung immer eine Harzkomponente A) mit Säuregruppen. Diese Komponente A) kann noch zusätzlich radikalisch polymerisierbare funktionelle Gruppen enthalten.

Ebenfalls erfindungsgemäß enthält die reaktive Zusammensetzung immer eine Epoxykomponente B). Diese Komponente B) kann noch zusätzlich radikalisch polymerisierbare funktionelle Gruppen enthalten.

Somit enthält die reaktive Zusammensetzung zwei Komponenten, wobei mindestens eine oder beide der Komponenten A) und B) eine durch radikalische Polymerisation reaktionsfähige Gruppe aufweist.

### Harzkomponente A) mit radikalisch polymerisierbare funktionelle Gruppen

Als Harzkomponente A) kommen alle monomeren, oligomeren oder polymeren Substanzen in Frage die mindestens eine Säuregruppe aufweisen und zusätzlich noch eine radikalisch polymerisierbare funktionelle Gruppe tragen. Solche Gruppen können z. B. Acrylat-, Methacrylat-, oder Vinylethergruppen sein. In Frage kommen also bevorzugt Acrylsäure, Methacrylsäue, Fumarsäure, Maleinsäure, Crotonsäure, Itaconsäure, Vinylbenzoesäure. Es können auch Mischungen eingesetzt werden.

Als Komponente A) können auch säuregruppenhaltige Komponenten ohne radikalisch polymerisierbare funktionelle Gruppen werden weiter unten beschrieben.

### Epoxykomponente B) mit radikalisch polymerisierbare funktionelle Gruppen

Als Epoxykomponente B) kommen alle monomeren, oligomeren oder polymeren Substanzen in Frage, die mindestens eine Epoxidgruppe aufweisen und zusätzlich noch eine radikalisch polymerisierbare funktionelle Gruppe tragen. Solche Gruppen können z. B. Acrylat-, Methacrylat-, oder Vinylethergruppen sein. In Frage kommen also bevorzugt Glycidylacrylat, Glycidylmethacrylat (GMA), sowie Umsetzungsprodukte von Polyepoxiden, bevorzugt Diglycidylether auf Basis Bisphenol A und Bisphenol F mit unterstöchiometrischen Mengen an Acrylsäure oder Methacrylsäure. Es können auch Mischungen eingesetzt werden.Epoxide ohne radikalisch polymerisierbare funktionelle Gruppen werden weiter unten beschrieben. Diese Epoxide sind prinzipiell auch als Epoxykomponente B) geeignet, wenn sie zusätzlich über noch eine radikalisch polymerisierbare funktionelle Gruppe tragen.

### Initiatoren C)

Als thermische Polymerisationsinitiatoren dienen insbesondere Peroxide oder Azoverbindungen. Unter Umständen kann es vorteilhaft sein, ein Gemisch verschiedener Initiatoren einzusetzen. Vorzugsweise finden halogenfreie Peroxide wie Permaleinate, Dilauroylperoxid, Dibenzoylperoxid, tert-Butylperoctoat, Di(tert-butyl)peroxid (DTBP), Di(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Besonders bevorzugte Initiatoren sind Dilauroylperoxid oder Dibenzoylperoxid. Eine besondere Ausführungsform eines Redox-Starter-Systems ist die Kombination aus Peroxiden und Beschleunigern, insbesondere Aminen. Es können auch Mischungen eingesetzt werden.

Als Amine seien zum Beispiel tertiäre aromatisch substituierte Amine, wie insbesondere N,N-Dimethyl-p-toluidin, N,N-bis-(2-Hydroxyethyl)-p-toluidin oder N,N-bis-(2-Hydroxypropyl)-p-toluidin genannt.

Photoinitiatoren und ihre Herstellung werden beschrieben z. B. in "RadiationCuring in Polymer Science & Technology, Vol II: Photoinitiating Systems" von J.P. Fouassier, J. F. Rabek , Elsevier Applied Science, London und New York, 1993. Häufig handelt es sich hierbei um α-Hydroxyketone bzw. Derivate dieser oder Phosphine. Die Photoinitiatoren können, falls vorhanden, in Mengen von 0,2 bis 10 Gew.-% enthalten sein. Als Photoinitiatoren kommen beispielsweise folgende im Markt erhältliche Produkte in Frage: Basf-CGI-725 (BASF), Chivacure 300 (Chitec), Irgacure PAG 121 (BASF), Irgacure PAG 103 (BASF), Chivacure 534 (Chitec), H-Nu 470 (Spectra group limited), TPO (BASF), 25 Irgacure 651 (BASF), Irgacure 819 (BASF), Irgacure 500 (BASF), Irgacure 127 (BASF), Irgacure 184 (BASF), Duracure 1173 (BASF).

Die Initiatoren sind für den Fall, dass diese zugesetzt werden, in einer Konzentration zwischen 0,2 und 10,0 Gew.-%, bevorzugt zwischen 0,5 und 3 Gew.-% und besonders bevorzugt 3 bis 6 Gew.-% in der Zusammensetzung enthalten. Es können auch Mischungen eingesetzt werden.

### Weitere Harzkomponenten A) und D) ohne radikalisch polymerisierbare Gruppen

Als säuregruppenhaltige Komponenten A) und D) kommen dabei z. B. monomere, oligomere oder polymere Carbonsäuren in Frage, bevorzugt Di- und Polycarbonsäuren. Die bevorzugten Carbonsäuren können aliphatischer, cycloaliphatischer, aromatischer und/oder heterocyclischer Natur sein. Darüber hinaus können die Carbonsäuren gegebenenfalls durch Halogenatome substituiert sein. Als Beispiele geeigneter Carbonsäuren seien Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutarsäure, 1,4-Cyclohexandicarbonsäure bzw. - soweit zugänglich - deren Anhydride genannt. Es können auch Mischungen eingesetzt werden.

Auch carboxylfunktionalisierte Polyester kommen in Frage. Die erfindungsgemäß eingesetzten Polyester sind erhältlich durch Polykondensation von einer oder mehreren Dicarbonsäuren und ein oder mehreren Diolen und/oder Polyolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Bevorzugte Polyester haben eine Säurezahl zwischen 20 und 500 mg KOH/g. Es können auch Mischungen eingesetzt werden.

### Epoxidverbindungen B) und D) ohne radikalisch polymerisierbare Gruppen

Geeignete Epoxidverbindungen B) und D) ohne radikalisch polymerisierbare Gruppen werden z. B. in EP675 185 beschrieben.

Es kommen eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen (Epoxidharze) können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidyläther, die sich von mehrwertigen Phenolen, insbesondere Bisphenolen sowie Novolaken ableiten und deren Molmassen bezogen auf die Anzahl der Epoxygruppen ME ("Epoxidäquivalentgewichte", "EV-Wert") zwischen 100 und 500, insbesondere jedoch zwischen 150 und 250 g/mol, liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'- '-Dihydroxydiphenyl,4,4'-Dihydroxybenzophenon, Bis-(4-hydroxyphenyl)-1,1-äthan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen wie beispielsweise Tetrabrom-Bisphenol A. Ganz besonders bevorzugt, werden flüssige Diglycidyläther auf Basis von Bisphenol A und Bisphenol F mit einem Epoxidäquivalentgewicht von 180 bis 190 g/mol.

Es können auch Polyglycidyläther von Polyalkoholen verwendet werden, wie z. B. Äthandiol-1,2-diglycidyläther, Propandiol-1,2-diglycidyläther, Propandiol-1,3-diglycidyläther, Butandioldiglycidyläther, Pentandioldiglycidyläther (auch Neopentylglykoldiglycidyläther), Hexandioldiglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, des 1,2,6-Hexantriols, Trimethylolpropans, Trimethyloläthans, Pentaerythrits, Sorbitols, Polyglycidyläther von oxalkylierten Polyolen (wie z. B. des Glycerins, Trimethylolpropans, Pentaerythrits u. a.), Diglydicyläther des Cyclohexandimethanols, Bis-(4-hydroxycyclohexyl)methans und 2,2-Bis-(4-hydroxycyclohexyl)propans, Polyglycidyläther des Rizinusöls, Triglycidyltris-(2-hydroxy-äthyl)-isocyanurat.

Weiterhin kommen als Komponente B) oder D) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien genannt Glycidylester ungesättigter Carbonsäuren und epoxidierte Ester von ungesättigten Alkoholen bzw. ungesättigten Carbonsäuren. Zusätzlich zu den Polyglycidyläthern können geringe Mengen von Monoepoxiden gemäss (A2) und (B2) (reaktive Verdünner), wie z. B. Methylglycidyläther, Butylglycidyläther, Allylglycidyläther, Äthylhexylglycidyläther, langkettige aliphatische Glycidyläther, wie z. B. Cetylglycidyläther und Stearylglycidyläther, Monoglycidyläther eines höheren isomeren Alkoholgemisches, Glycidyläther einer Mischung von C12 bis C13 Alkoholen, Phenylglycidyläther, Kresylglycidyläther, p-t-Butylphenylglycidyläthers, p-Octylphenylglycidyläther, p-Phenyl-phenylglycidyläther, Glycidyläther eines oxalkylierten Laurylalkohols sowie Monoepoxide wie beispielsweise epoxidierte einfach ungesättigte Kohlenwasserstoffe (Butylen-, Cyclohexen-, Styroloxid), halogenhaltige Epoxide, wie z. B. Epichlorhydrin, in Massenanteilen bis zu 30 %, vorzugsweise 10 bis 20 %, bezogen auf die Masse der Polyglycidyläther mitverwendet werden.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2. Es können jeweils auch Mischungen von mehreren Epoxidharzen verwendet werden.

Als epoxidgruppenhaltige Komponenten B) oder D) kommen dabei z.B. Glycidylether und Glycidylester, aliphatische Epoxide, Diglycidylether auf Basis Bisphenol A und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen der genannten Epoxidverbindungen eingesetzt werden.

### Weitere Harzkomponenten E)

Die Schreibweise (Meth)acrylate umfasst dabei sowohl Methacrylate als auch Acrylate, sowie Mischungen aus Methacrylaten und Acrylaten.

Bei den in dem Reaktionsharz enthaltenden Verbindungen E) handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat oder Isobornyl(meth)acrylat.

Als Bestandteile von Monomergemischen eignen sich auch zusätzliche Monomere mit einer weiteren funktionellen Gruppe, wie a,ß-ungesättigte Mono- oder Dicarbonsäuren, beispielsweise Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise silylfunktionelle (Meth)acrylate. Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter Anderem 1-Alkene oder Styrole. Es können auch Mischungen eingesetzt werden.

Ein optionaler Bestandteil des erfindungsgemäßen Reaktionsharzes sind Vernetzer als Komponente E). Dabei handelt es sich insbesondere um mehrfunktionelle Methacrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat, Hexandioldiacrylat oder Trimethylolpropantri(meth)acrylat. Es können auch Mischungen eingesetzt werden.

Im Einzelnen wird die Zusammensetzung der Monomere nach Anteil und Zusammensetzung zweckmäßigerweise im Hinblick auf die gewünschte technische Funktion und das zu benetzende Trägermaterial gewählt werden. Es können auch Mischungen eingesetzt werden.

Die Harzkomponente kann neben den aufgeführten Monomeren auch Polymere als Komponente E) enthalten, zur besseren Unterscheidbarkeit im Rahmen dieses Schutzrechtes als Präpolymer bezeichnet, bevorzugt Polyester(meth)acrylate, Polyurethan(meth)acrylate oder Poly(meth)acrylate. Diese werden zur Verbesserung der Polymerisationseigenschaften, der mechanischen Eigenschaften, der Haftung zum Trägermaterial, der Viskositätseinstellung bei der Verarbeitung bzw. Benetzung des Trägermaterials mit dem Harz, sowie der optischen Anforderungen an die Harze eingesetzt. Der Präpolymeranteil liegt dabei zwischen 1 Gew.-% und 50 Gew.-%, bevorzugt zwischen 15 Gew.-% und 40 Gew.-%, falls vorhanden. Die Präpolymere können zusätzliche funktionelle Gruppen zur Haftvermittlung oder zur Copolymerisationin der Vernetzungsreaktion, wie beispielsweise in Form von Doppelbindungen, aufweisen. Bevorzugt weisen die Präpolymere Hydroxy-, Amin- oder Thiolgruppen auf.

Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.

Besagte Polyester werden in Substanz via Polykondensation oder ringöffnende Polymerisation gewonnen, setzen sich aus den für diese Anwendungen bekannten Bausteinen zusammen, und können nachfolgend mit Hilfe von (Meth)Acrylsäure umgesetzt werden.

Es können auch Mischungen eingesetzt werden.

### Komponente F)

Als Regler Komponente F) können alle aus der radikalischen Polymerisation bekannten Verbindungen verwendet werden. Bevorzugt werden Mercaptane wie n- Dodecylmercaptan eingesetzt.

Ebenso können UV-Stabilisatoren als Komponente F) eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.

Aus der Gruppe der Stabilisatoren bzw. Inhibitoren Komponente F) werden vorzugsweise substituierte Phenole, Hydrochinonderivate, Phosphine und Phosphite eingesetzt. Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10 - 700 nm2/g besonders geeignet sind. Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt. Es können auch Mischungen eingesetzt werden.

Der Verfahrensschritt I. kann beispielsweise durch Zusammenrühren der Komponenten A) und B) und optional der weiteren Komponenten C) - E) erfolgen.

Verfahrensschritt II, die Imprägnierung, erfolgt durch Tränkung der Fasern, Gewebe oder Gelege mit der in Verfahrensschritt I hergestellten Formulierung. Bevorzugt erfolgt die Imprägnierung bei Raumtemperatur.

Verfahrensschritt III, der Polymerisation der Harzkomponente, erfolgt direkt nach Verfahrensschritt II. Die Polymerisation im Schritt III. erfolgt durch Erwärmung, Bestrahlung mit elektromagnetischer Strahlung, bevorzugt UV-Strahlung, mit Elektronenstrahlung oder durch Anlegen eines Plasmafeldes. Dabei ist darauf zu achten, dass die Temperatur unterhalb der für Verfahrensschritt V. benötigten Aushärtetemperatur liegt.

Die Polymerisation in Verfahrensschritt III wird entweder thermisch initiiert oder mittels UV-Härtung, Elektronenstrahlung oder Plasmaeinwirkung.

UV-Lampen werden z. B. beschrieben in "Radiation Curing in Polymer Science & Technology, Vol I: Fundamentals and Methods" von J. P. Fouassier, J. F. Rabek, Elsevier Applied Science, London and New York, 1993, Chapter 8, Seiten 453 bis 503. Bevorzugt werden UV-Lampen, die wenig bis gar keine Wärmstrahlung aussenden, z.B. UV-LED-Lampen.

Elektronenstrahlhärtung und -härter werden z. B. beschrieben in "Radiation Curing in Polymer Science & Technology, Vol I: Fundamentals and Methods" von J. P. Fouassier, J. F. Rabek , Elsevier Applied Science, London und New York, 1993, Chapter 4, Seiten 193 bis 225 und in Chapter 9, Seiten 503 bis 555. Werden Elektronenstrahlen zur Polymerisationsinitiierung verwendet, sind Photoinitiatoren nicht mehr notwendig.

Das gleiche gilt für Plasmaanwendungen. Plasmen werden häufig im Vakuum eingesetzt. Plasmapolymerisation von MMA wird beispielsweise in den Arbeiten von C. W. Paul, A. T. Bell und D. S. Soong "Initiation of Methyl Methacrylate Polymerization by the Nonvolatile Products of a Methyl Methacrylate Plasma. 1. Polymerization Kinetics" (Macromolecules 1985, vol. 18, 11, 2312-2321) beschrieben. Hier wird ein solches Vakuumplasma eingesetzt. Erfindungsgemäß wird bei dem vorliegenden Verfahren als Radikalquelle ein sogenanntes Atmosphärendruckplasma eingesetzt. Dazu können beispielsweise handelsübliche Plasmajets/Plasmabeams, wie sie z. B. die Firma Plasmatreat GmbH oder die Firma Diener GmbH anbieten, eingesetzt werden. Das Plasma arbeitet unter Atmosphärendruck und wird unter anderem in der Automobilindustrie zum Entfernen von Fetten oder anderen Verunreinigungen 10 auf Oberflächen eingesetzt. Im Gegensatz zu dem in der Literatur beschriebenen Plasmaverfahren wird das Plasma erfindungsgemäß außerhalb der eigentlichen Reaktionszone (Polymerisation) erzeugt und mit hoher Strömungsgeschwindigkeit auf die Oberfläche der zu behandelnden applizierten Reaktionsharz- oder Kaltplastikbeschichtung auf der Bodenfläche geblasen. Dabei entsteht eine Art "Plasmafackel". Vorteil des Verfahrens ist, dass die eigentliche Plasmabildung nicht durch das Substrat beeinflusst wird, was zu einer hohen Prozesssicherheit führt. Die Plasmajets werden normalerweise mit Luft betrieben, so dass ein Sauerstoff/Stickstoff Plasma entsteht. Bei den Plasmajets wird das Plasma durch eine elektrische Entladung im inneren der Düse erzeugt. Die Elektroden sind elektrisch getrennt. Es wird eine so hohe Spannung angelegt, bis ein Funken von einer Elektrode zur anderen Übergeht. Es kommt zur Entladung. Dabei können unterschiedlich viele Entladungen pro Zeiteinheit eingestellt werden. Die Entladungen können durch Pulsen einer Gleichspannung erfolgen. Eine weitere Möglichkeit ist die Entladungen durch eine Wechselspannung zu erreichen.

Durch die Verfahrensschritte I.-III erfolgt die Herstellung eines Prepregs. Nach der Herstellung des Prepregs auf der Faser mit Hilfe von Erwärmung, Strahlen oder Plasmen in Verfahrensschritt III kann dieses Produkt gestapelt und in Form gebracht werden. Die Prepregs sind dann lagerstabil, das heißt über einen Zeitraum bis zu mehreren Monaten zu lagern, ohne dass eine Vernetzung eintritt.

In Verfahrensschritt IV können die so hergestellten Prepregs je nach Bedarf zu unterschiedlichen Formen kombiniert und zugeschnitten werden. Insbesondere werden zur Konsolidierung mehrerer Composite-Halbzeuge zu einem einzigen Composite und vor endgültiger Vernetzung des Matrixmaterials zur Matrix zugeschnitten, gegebenenfalls vernäht oder anderweitig fixiert.

Die erfindungsgemäß hergestellten Prepregs weisen nach Verfahrensschritt III bzw. IV eine hohe Lagerstabilität bei Raumtemperatur auf. Diese beträgt je nach enthaltener reaktiver Zusammensetzung mindestens einige Tage bei Raumtemperatur. In der Regel sind die Prepregs mehrere Wochen bei Raumtemperatur lagerstabil. Die so hergestellten Prepregs sind in der Regel nicht klebrig und daher sehr gut zu handhaben und weiter zu verarbeiten. Die erfindungsgemäß eingesetzten reaktiven oder hochreaktiven Zusammensetzungen weisen demnach eine sehr gute Haftung und Verteilung auf dem faserförmigen Träger auf.

In Verfahrensschritt V erfolgt die endgültige Aushärtung der Prepregs zu Formteilen, die duroplastisch vernetzt sind. Dies erfolgt durch eine thermische Aushärtung der Säuregruppen der Harzkomponente A mit den Epoxidgruppen der Komponente B).

Im Verfahrensschritt V erfolgt die endgültige Aushärtung mit Hilfe von Wärme. Je nach Einsatz und Menge von Katalysatoren erfolgt diese Aushärtung bei Temperaturen zwischen 80 und 220 °Cund . 72 h und 5 sec. Bevorzugt bei Temperaturen zwischen 140 und 200 °C sowie bei Aushärtungszeiten von 30 min bis 3 min. Bevorzugt wird während der Vernetzung ein äußerer Druck aufgelegt. Die erfindungsgemäß eingesetzten Polymerzusammensetzungen bieten einen sehr guten Verlauf bei geringer Viskosität und damit eine gute Imprägnierfähigkeit und im ausgehärteten Zustand eine ausgezeichnete Chemikalienbeständigkeit. Bei Verwendung von aliphatischen Vernetzern und durch die erfindungsgemäße Verwendung der funktionalisierten Poly(meth)acrylate wird zusätzlich noch eine gute Witterungsbeständigkeit erreicht.

Möglich ist aber auch die Verwendung von speziellen Katalysatoren als Komponente F) zur Reaktionsbeschleunigung der Aushärtung in Verfahrensschritt V, z. B. quartäre Ammoniumsalze, vorzugsweise, Carboxylate, Halogenide oder Hydroxide, oder basische Aminderivate, z. B. Amidine, Guanidine oder Imidazolverbindungen. Diese Katalysatorsysteme können dafür sorgen, dass die Härtungstemperatur für die Aushärtung bis auf 100 °C zurückgeht, oder aber bei höheren Temperaturen geringere Härtungszeiten benötigt werden.

### Weitere Bestandteile der Composites

Zusätzlich zu den Harzkomponente und dem Trägermaterial können die Composites noch weitere Zusatzstoffe aufweisen. So können beispielsweise Lichtschutzmittel wie z. B. sterisch gehinderte Amine, oder andere Hilfsmittel, wie sie z. B. in EP 669 353 beschrieben wurden, in einer Gesamtmenge von 0,05 bis 5 Gew.-%zugesetzt werden. Füllstoffe und Pigmente wie z. B. Titandioxid können in einer Menge bis zu 30 Gew.-%der Gesamtzusammensetzung zugesetzt werden. Für die Herstellung der erfindungsgemäßen reaktiven Zusammensetzungen können darüber hinaus Zusatzstoffe wie Verlaufsmittel, z. B. Polysilicone oder Haftvermittler, z. B. auf Acrylatbasis, zugesetzt werden. Zusätzlich können noch weitere Komponenten optional enthalten sein. Als Hilfs und Zusatzstoffe können zusätzlich Regler, Weichmacher, Stabilisatoren und/oder Inhibitoren eingesetzt werden. Darüber hinaus können Farbstoffe, Füllstoffe, Netz-, Dispergier- und Verlaufshilfsmittel, Haftvermittler, UV-Stabilisatoren, Entschäumer und Rheologieadditive zugesetzt werden.

Gegenstand der Erfindung ist auch die Verwendung der Composites, insbesondere mit faserförmigen Trägern aus Glas-, Kohle- oder Aramid-Fasern.

Gegenstand der Erfindung ist insbesondere auch die Verwendung der erfindungsgemäß hergestellten Prepregs, zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z. B. für Rotorblätter bei Windkraftanlagen.

Gegenstand der Erfindung sind auch die aus den erfindungsgemäß hergestellten Composite-Halbzeuge bzw. Prepregs hergestellte Formteile bzw. Composite-Bauteile, aufgebaut aus mindestens einem faserförmigen Träger und mindestens einer vernetzten Reaktivzusammensetzung.

Gegenstand der Erfindung sind auch Composites, erhalten durch die Verfahrensschritte:
I. Herstellung einer reaktiven Zusammensetzung enthaltend
   A) mindestens eine reaktive Harzkomponente, die mindestens eine Säuregruppe aufweist, und
   B) mindestens eine reaktive Harzkomponente auf Epoxybasis,
   wobei mindestens eine oder beide der Komponenten A) und B) eine durch radikalische Polymerisation reaktionsfähige Gruppe aufweist,
II. Direkte Imprägnierung eines faserförmigen Trägers mit der Zusammensetzung aus I.,
III. Polymerisation der radikalisch polymerisierbaren Harzkomponenten in der Zusammensetzung mittels thermisch oder mit elektromagnetischer Strahlung aktivierbarer Radikalstarter, elektromagnetischer Strahlung, Elektronenstrahlung oder einem Plasma, wobei ein Prepreg erhalten wird,
   danach
IV. Formgebung zum Formteil
   und
V. Aushärten der Epoxykomponente in der Zusammensetzung.

Durch das Beispiel wird die Erfindung näher erläutert.

### Beispiel

14,2 g Glycidylmethacrylat (Aldrich) wurden mit 7,2 g Acrylsäure (Aldrich) und 21,4 g Isobornylacrylat (Aldrich) gemischt. Dazu kamen noch 3,4 g Irgacure 184 (Photoinitiator, BASF). Mit dieser Mischung wurde ein Glasfasergewebe (KVG, Style 7628, 200 g/m²) getränkt und unter UV (Minicure, 80 W/cm) von beiden Seiten jeweils mit 2 x 3 m/min bestrahlt. Danach war das Prepreg klebfrei. Vier solcher Prepregschichten wurden über einander gelegt, mit einem kg Gewicht beschwert und 60 min bei 160 °C vollständig ausgehärtet. Aus dem fertigen Composite wurden T-förmige Teststäbchen (7,5 cm lang, 4 mm breit, 0,5 mm dick, 2 mm² Querschnittsfläche) ausgestanzt und einer Zugprüfung ausgesetzt. Der Mittelwert aus drei Prüfungen und einer mittleren Maximalkraft von 796 N lag bei einer Zugfestigkeit von 400 MPa und einer Bruchdehnung von 9,5 %.

## Patentansprüche

1. Verfahren zur Herstellung von Composites erhalten durch die Verfahrensschritte:
I. Herstellung einer reaktiven Zusammensetzung enthaltend
A) mindestens eine reaktive Harzkomponente, die mindestens eine Säuregruppe
aufweist,
und
B) mindestens eine reaktive Harzkomponente auf Epoxybasis,
wobei mindestens eine oder beide der Komponenten A) und B) eine durch radikalische Polymerisation reaktionsfähige Gruppe aufweist,
II. Direkte Imprägnierung eines faserförmigen Trägers mit der Zusammensetzung aus I.,
III. Polymerisation der radikalisch polymerisierbaren Harzkomponenten in der Zusammensetzung mittels thermisch oder mit elektromagnetischer Strahlung aktivierbarer Radikalstarter, elektromagnetischer Strahlung, Elektronenstrahlung oder einem Plasma, wobei ein Prepreg erhalten wird,
danach
IV. Formgebung zum Formteil
und
V. Aushärten der Epoxykomponente in der Zusammensetzung.

2. Verfahren zur Herstellung von Composites nach Anspruch 1, **dadurch gekennzeichnet, dass** die reaktive Zusammensetzung noch mindestens eine der folgenden Komponenten enthält:
C) mindestens einen Initiator ausgewählt aus mindestens einem thermischen Radikalstarter und/oder einem Photoinitiator,
D) weitere Säuren oder Epoxide ohne radikalisch polymerisierbare Gruppen,
E) weitere radikalisch polymerisierbare Komponenten ohne Säure- oder Epoxygruppen,
F) weitere Hilfs- und Zuschlagstoffe.

3. Verfahren zur Herstellung von Composites nach mindestens einem der vorherigen Ansprüche, **dadurch gekennzeichnet, dass** das Mengenverhältnis der Säurekomponente A) zur Epoxykomponente B) zwischen 90 zu 10 und 10 zu 90 variiert.

4. Verfahren zur Herstellung von Composites nach mindestens einem der vorherigen Ansprüche, **dadurch gekennzeichnet, dass** auf jede Säuregruppe der Komponente A) 0,3 bis 3,0, bevorzugt 0,5 bis 2,0 besonders bevorzugt 0,8 bis 1,2 Epoxygruppen der Komponente B) entfallen.

5. Verfahren zur Herstellung von Composites nach mindestens einem der vorherigen Ansprüche, **dadurch gekennzeichnet, dass** die faserförmigen Träger aus Glas, Kohlenstoff, Kunststoffen, Naturfasern und/oder mineralischen Fasermaterialien, bestehen, einzeln oder aus Mischungen, oder aus mehreren Lagen verschiedener Fasertypen.

6. Verfahren zur Herstellung von Composites nach mindestens einem der vorherigen Ansprüche, **dadurch gekennzeichnet, dass** die faserförmigen Träger als textile Flächengebilde aus Vlies, Maschenware, Gewirke oder Gestricke, nicht maschige Gebinde wie Gewebe, Gelege, Geflechte, Langfaser-materialien und/oder Kurzfasermaterialien, vorliegen.

7. Verfahren zur Herstellung von Composites nach mindestens einem der vorherigen Ansprüche, **dadurch gekennzeichnet, dass** die faserförmigen Träger aus Glasfasern, Kohlenstofffasern, Aramidfasern oder keramischen Fasern bestehen, einzeln oder aus Mischungen, oder aus mehreren Lagen verschiedener Fasertypen.

8. Verfahren zur Herstellung von Composites nach mindestens einem der vorherigen Ansprüche, **dadurch gekennzeichnet, dass** die Komponente A) Acrylatgruppen, Methacrylatgrupen, und/oder Vinylethergruppen enthält.

9. Verfahren zur Herstellung von Composites nach mindestens einem der vorherigen Ansprüche, **dadurch gekennzeichnet, dass** die Komponente A) ausgewählt ist aus Acrylsäure, Methacrylsäure, Fumarsäure, Maleinsäure, Crotonsäure, Itaconsäure, Vinylbenzoesäure.

10. Verfahren zur Herstellung von Composites nach mindestens einem der vorherigen Ansprüche , **dadurch gekennzeichnet, dass** die Komponente B) Acrylatgruppen, Methacrylatgrupen, und/oder Vinylethergruppen enthält.

11. Verfahren zur Herstellung von Composites nach mindestens einem der vorherigen Ansprüche, **dadurch gekennzeichnet, dass** die Komponente B) ausgewählt ist aus Glycidylacrylat, Glycidylmethacrylat, oder Umsetzungsprodukte von Polyepoxiden mit unterstöchiometrischen Mengen an Acrylsäure und/oder Methacrylsäure.

12. Verfahren zur Herstellung von Composites nach mindestens einem der vorherigen Ansprüche, **dadurch gekennzeichnet, dass** die Komponente B) ausgewählt ist aus Umsetzungsprodukten von Bisphenol A und/oder Bisphenol F mit unterstöchiometrischen Mengen an Acrylsäure und/oder Methacrylsäure.

13. Verfahren zur Herstellung von Composites nach mindestens einem der vorherigen Ansprüche, **dadurch gekennzeichnet, dass** die Komponente C) ausgewählt ist aus Permaleinate, Dilauroylperoxid, Dibenzoylperoxid, tert-Butylperoctoat, Di(tert-butyl)peroxid , Di(tert-amyl)peroxid , tert-Butylperoxy-(2-ethylhexyl)carbonat , N,N-Dimethyl-p-toluidin, N,N-bis-(2-Hydroxyethyl)-p-toluidin oder N,N-bis-(2-Hydroxypropyl)-p-toluidin.

14. Verfahren zur Herstellung von Composites nach mindestens einem der vorherigen Ansprüche, **dadurch gekennzeichnet, dass** Epoxidverbindungen B) und/oder D) ohne radikalisch polymerisierbare Gruppen ausgewählt aus Diglycidyläther auf Basis von Bisphenol A und/oder Bisphenol F mit einem Epoxidäquivalentgewicht von 180 bis 190 g/mol, eingesetzt werden.

15. Verfahren zur Herstellung von Composites nach mindestens einem der vorherigen Ansprüche, **dadurch gekennzeichnet**, das als Harzkomponenten A) und/oder D) ohne radikalisch polymerisierbare Gruppen monomere, oligomere oder polymere Carbonsäuren, bevorzugt Di- und Polycarbonsäuren, eingesetzt werden.

16. Verfahren zur Herstellung von Composites nach mindestens einem der vorherigen Ansprüche, **dadurch gekennzeichnet**, das Harzkomponenten A) und/oder D) ohne radikalisch polymerisierbare Gruppen ausgewählt aus Bernsteinsäure, Adipinsäure, Korksäure, Azelainsäure, Sebacinsäure, Phthalsäure, Terephthalsäure, Isophthalsäure, Trimellitsäure, Pyromellitsäure, Tetrahydrophthalsäure, Hexahydrophthalsäure, Hexahydroterephthalsäure, Di- und Tetrachlorphthalsäure, Endomethylentetrahydrophthalsäure, Glutarsäure, 1,4-Cyclohexandicarbonsäure, und soweit zugänglich deren Anhydride, allein oder in Mischungen, eingesetzt werden.

17. Verfahren zur Herstellung von Composites nach mindestens einem der vorherigen Ansprüche, **dadurch gekennzeichnet**, das als Harzkomponenten A) und/oder D) ohne radikalisch polymerisierbare Gruppen carboxylfunktionalisierte Polyester, bevorzugt Polyester mit einer Säurezahl zwischen 20 und 500 mg KOH/g, eingesetzt werden.

18. Verfahren zur Herstellung von Composites nach mindestens einem der vorherigen Ansprüche, **dadurch gekennzeichnet, dass** die Reaktionsharze als Komponente E) ausgewählt sind aus Methyl(meth)acrylat, Ethyl(meth)acrylat, n-Butyl(meth)acrylat, 2-Ethylhexyl(meth)acrylat, Isobornyl(meth)acrylat., Hydroxyethyl(meth)acrylat, Hydroxypropyl(meth)acrylat; Acrylamid, Methacrylamid, Dimethylaminoethyl(meth)acrylat, Poly(meth)acrylaten.

19. Verfahren zur Herstellung von Composites nach mindestens einem der vorherigen Ansprüche, **dadurch gekennzeichnet, dass** die Vernetzer als Komponente E) ausgewählt sind aus Allyl(meth)acrylat, 1,4-Butandioldi(meth)acrylat, Tetraethylenglycoldi(meth)acrylat, Triethylenglycoldi(meth)acrylat, Hexandioldiacrylat oder Trimethylolpropantri(meth)acrylat, Polyester(meth)acrylaten, Polyurethan(meth)acrylaten, Poly(meth)acrylaten.

20. Verwendung der Prepregs nach mindestens einem der vorherigen Ansprüche, zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z.B. für Rotorblätter bei Windkraftanlagen.

21. Formteile aufgebaut aus mindestens einem faserförmigen Träger und mindestens einer vernetzten Reaktivzusammensetzung nach mindestens einem der vorherigen Ansprüche 1 - 18.

22. Composites, erhalten durch die Verfahrensschritte:
I. Herstellung einer reaktiven Zusammensetzung enthaltend
A) mindestens eine reaktive Harzkomponente, die mindestens eine Säuregruppe
aufweist,
und
B) mindestens eine reaktive Harzkomponente auf Epoxybasis,
wobei mindestens eine oder beide der Komponenten A) und B) eine durch radikalische Polymerisation reaktionsfähige Gruppe aufweist,
II. Direkte Imprägnierung eines faserförmigen Trägers mit der Zusammensetzung aus I.,
III. Polymerisation der radikalisch polymerisierbaren Harzkomponenten in der Zusammensetzung mittels thermisch oder mit elektromagnetischer Strahlung aktivierbarer Radikalstarter, elektromagnetischer Strahlung, Elektronenstrahlung oder einem Plasma, wobei ein Prepreg erhalten wird,
danach
IV. Formgebung zum Formteil
und
V. Aushärten der Epoxykomponente in der Zusammensetzung.
